# EUROPEAN PATENT SPECIFICATION

(11) **EP 1 759 576 B1**
(45) Date of publication and mention of the grant of the patent: **15.06.2011**
(21) Application number: 06253021.7
(22) Date of filing: 12.06.2006
(51) Int. Cl.: A01D 43/063

(54) **Lawnmower**
Rasenmäher
Tondeuse à gazon

(30) Priority: 31.08.2005 GB 0517726
(43) Date of publication of application: 07.03.2007
(73) Proprietor: Husqvarna UK Limited, County Durham, DL5 6UP (GB)
(72) Inventor: Blackburn, Richard M., County Durham, DL5 6GQ (GB); Stockley, Paul, County Durham, DL5 6 SA (GB)
(74) Representative: Pratt, David Martin

(56) References cited:
- EP-A1- 0 253 231
- WO-A-89/05573
- US-A- 4 843 805

## Description

This invention relates to a lawnmower having a grass-box located behind the cutting chamber of the lawnmower (see e.g. EP 0 253 231).

A known lawnmower has a deck defining a cutting chamber which houses a cutter. Grass cut by the cutter it is rejected rearwardly together with a stream of air generated by movement of the cutter. This stream of air and cut grass leaves the cutting chamber, via a chute, and is directed into the grass-box which is a positioned behind the cutting chamber. This type of lawnmower is known as a rear-collect lawnmower.

A conventional rear-collect lawnmower has a lift-off grass-box which is hung by its front top edge to the deck of the lawnmower. In order to meet legal requirements, a sprung safety flap is used to cover the exit chute when the grass-box is not fitted to the lawnmower. This flap is usually sprung from its top edge, requiring the user to hold the flap in the upper position with one hand whilst fitting the grass-box with the other hand. This is an awkward operation, and requires lots of bending and twisting by the user and two-handed operation.

An aim of the invention is to provide a rear-collect lawnmower whose grass-box can be fitted and removed in a simple one-handed operation.

The present invention provides a lawnmower comprising a deck defining a cutting chamber open to ground datum, an exit aperture for directing cut grass away from the cutting chamber, and a grass-box having an entry opening for admitting cut grass, wherein the grass-box is detachably mounted on, and supported by a carrier, and the carrier is pivotally mounted on the deck for movement between a first position, in which the grass-box entry opening is in alignment with the exit aperture, and a second position, in which the grass-box entry opening is out of alignment with the exit aperture and the carrier guards the exit aperture.

Preferably, the exit aperture is formed in the deck, and a chute leads from a cutting chamber exit to the exit aperture.
In a preferred embodiment, the carrier has a base plate and two side plates. Preferably, each of the side plates is provided with an inwardly-projecting flange, and the side walls of the grass-box are provided with complementary grooves, the flanges and the grooves constituting means for detachably mounting the grass-box on the carrier.

Advantageously, the flanges taper along their lengths.

Conveniently, the arrangement is such that the grass-box is locked to the carrier in all positions but said second position.

Preferably, the carrier is pivotally attached to the deck by two pairs of links, one pair at each side of the lawnmower, each link of each pair being pivotally attached to both the deck and the carrier at opposite ends thereof.

Advantageously, one link of each pair is longer than the other link of that pair, and each said one link is positioned beneath each said other link.

A lawnmower constructed in accordance with the invention will now be described in greater detail, by way of example, with reference to the drawings, in which:
Figure 1 is a perspective view of the lawnmower with its grass-box in a first operating position;
Figure 2 is a perspective view of the lawnmower with its grass-box in an intermediate position;
Figure 3 is a perspective view of the lawnmower with its grass-box in a second operating position; and
Figure 4 is a perspective view of the lawnmower with its grass-box removed.

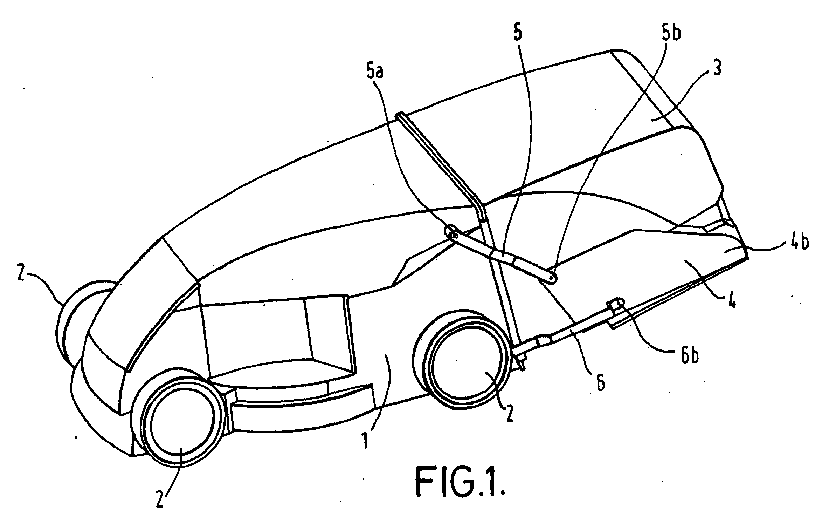

Referring to the drawings, Figure 1 shows a wheeled rotary lawnmower having a deck 1 supported by wheels 2. The deck 1 defines a cutting chamber (not shown) which is open to ground datum. A cutting blade (not shown) is mounted in the cutting chamber for rotation about a substantially vertical axis. A grass-box 3 is mounted on a carrier 4 attached to the deck 1 by means of a respective pair of links (only one of which pair of links can be seen in the drawings) at each side of the deck. Each pair of links is constituted by a first, upper link 5, and a second, lower link 6. Each link 5 is pivotally attached to the deck 1 by a pivot point 5a, and to the carrier 4 by a pivot point 5b. Similarly, each link 6 is pivotally attached to the deck 1 by a pivot point 6a, and to the carrier 4 by a pivot point 6b.

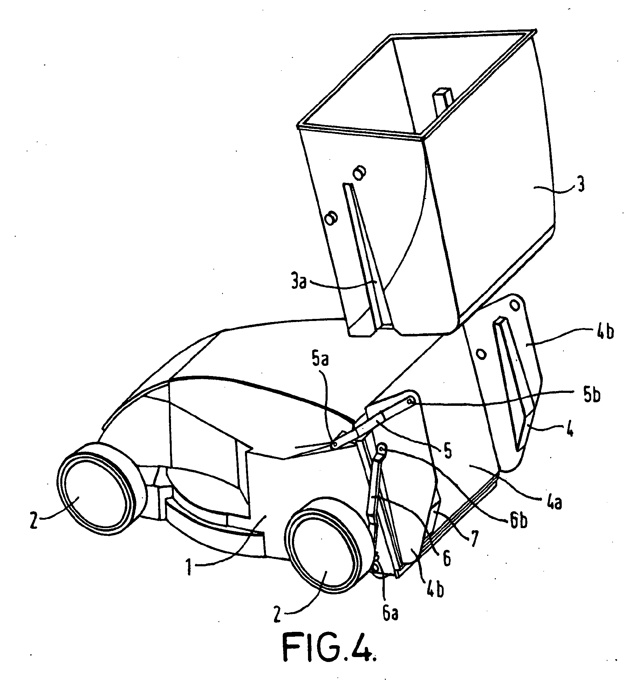

As best seen in Figure 4, the carrier 4 has a base plate 4a and a pair of side plates 4b. A respective tapered flange 7 is formed on the inside of each of the side plates 4b, the flanges complementing tapered grooves 3a formed in the sidewalls of the grass-box 3. The grass-box 3 can, therefore, be fixed to the carrier 4 by the inter-engagement of the grooves 3a and the flanges 4b.

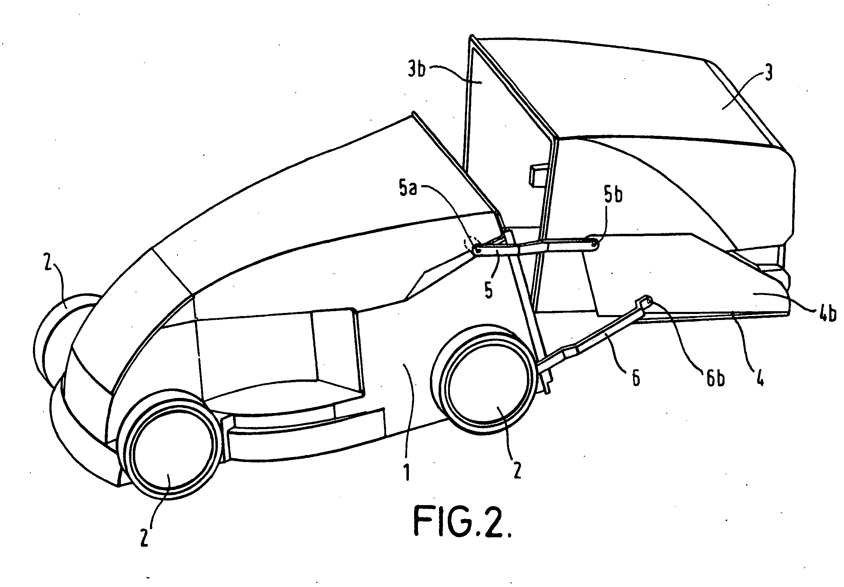

The cutting blade may be formed with up-turned tips, so that rotation of the cutting blade generates an air inflow which carries grass cut by the blade towards a chute (not shown) which connects the cutting chamber to the rear of the deck 1. The grass-box 3 has an open front end 3b (as can be seen in Figures 2 to 4), through which the cut grass can enter the grass-box from the cutting chamber.

When the lawnmower is not to be used, the carrier 4 is in the position shown in Figure 4, in which the base plate 4a of the carrier 4 overlies the rear of the deck 1. The base plate 4a thus acts as a safety flap covering the exit of the chute. With the carrier 4 in this position, the grass-box 3 can be fixed to the carrier by the engagement of the grooves 3a with the flanges 7. The carrier 4 can then be pivoted through substantially 90° to the position shown in Figure 1, in which the grass-box 3 is in the working position with its open front end 3b overlying the exit of the chute.

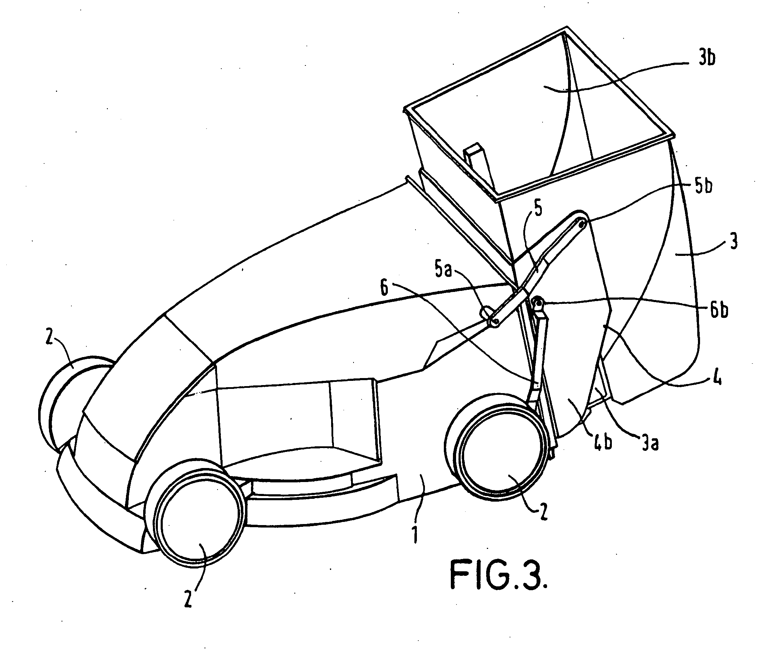

When the grass-box 3 is full, the carrier 4 is pivoted from the position shown in Figure 1 to the position are shown in Figure 3, via the position shown in Figure 2. The grass-box 3 can then be removed from the carrier 4, for emptying, by disengaging the grooves 3a from the flanges 7. The empty grass-box 3 can then be re-mounted on the carrier 4 by re-engaging the grooves 3a with the flanges 7. The engagement between the tapered grooves 3a and the tapered flanges 7 is a positive location, so that the grass-box 3 cannot be removed from of the carrier 4 until the carrier is in the position shown in Figure 3.

As the carrier 4 is fixed to the deck 1 by two pairs of links 5, 6, a four-bar link system, constituted by the links, the carrier and the deck, is provided. As the links 5, 6 are of different lengths, they provide a locus of movement such that the grass-box 3 is held, in the working position shown in Figure 1, against the rear of the deck 1. In this configuration, the grass-box 3 is positioned for optimum grass collection. When rotated upwardly, to the position shown in Figure 3, the open end 3b of the grass-box 3 is positioned substantially horizontally, so that cut grass is unlikely to fall out of the grass-box when the grass-box is removed for emptying.

A spring (not shown) is provided to bias the carrier 4 towards the position shown in Figure 3, that is to say towards the position where the base plate 4a acts as a safety flap, and the grass-box 3 is positioned for removal from the carrier 4. This spring biasing of the carrier 4 ensures that the base plate 4a is held firmly against the rear of the deck 1 when the lawnmower is not in use. Alternatively, or in addition, a catch could be provided to hold the carrier 4 in this position.

It will be apparent that modifications could be made to the lawnmower described above. For example, if the lawnmower is to be used in a non-collect mode, that is to say with the grass-box 3 removed, means would be provided for holding the carrier with the base plate 4a angled away from the rear of the deck 1, to allow cut grass to exit the cutting chamber and fall to the ground at the rear of the machine.

Although the lawnmower described above is a wheeled rotary lawnmower, it will be apparent that the invention is equally applicable to a hover mower or a cylinder mower.

## Claims

1. A lawnmower comprising a deck (1) defining a cutting chamber open to ground datum, an exit aperture for directing cut grass away from the cutting chamber , and a grass-box (3) having an entry opening (3b) for admitting cut grass, wherein the grass-box is detachably mounted on, and supported by, a carrier (4), and the carrier is pivotally mounted on the deck for movement between a first position, in which the grass-box entry opening is in alignment with the exit aperture, and second position, in which the grass-box entry opening is out of alignment with the exit aperture and the carrier guards the exit aperture.

2. A lawnmower as claimed in claim 1, wherein the exit aperture is formed in the deck, and a chute leads from a cutting chamber exit to the exit aperture.

3. A lawnmower as claimed in claim 1 or claim 2, wherein the carrier (4) has a base plate (4a) and two side plates (4b).

4. A lawnmower as claimed in claim 3, wherein each of the side plates (4b) is provided with an inwardly-projecting flange (7), and the side walls of the grass-box (3) are provided with complementary grooves (3a), the flanges and the grooves constituting means for detachably mounting the grass-box on the carrier (4).

5. A lawnmower as claimed in claim 4, wherein the flanges (7) taper along their lengths.

6. A lawnmower as claimed in any one of claims 1 to 5, wherein the arrangement is such that the grass-box (3) is locked to the carrier (4) in all positions but said second position.

7. A lawnmower as claimed in any one of claims 1 to 6, wherein the carrier (4) is pivotally attached to the deck (1) by two pairs of links (5, 6), one pair at each side of the lawnmower, each link of each pair being pivotally attached to both the deck and the carrier at opposite ends thereof.

8. A lawnmower as claimed in claim 7, wherein one link of each pair is longer than the other link of that pair, and each said one link is positioned beneath each said other link.

## Patentansprüche

1. Rasenmäher mit einem Gehäuse (1), welches eine bodenseitig offene Schneidkammer definiert, einer Austrittsöffnung zum Führen von geschnittenem Gras weg von der Schneidkammer und einem Grasbehälter (3) mit einer Eintrittsöffnung (3b) zum Aufnehmen des geschnittenen Grases, wobei der Grasbehälter auf einem Träger abnehmbar befestigt ist und durch diesen gelagert wird, und wobei der Träger verschwenkbar an dem Gehäuse für eine Bewegung zwischen einer ersten Stellung, in welcher die Eintrittsöffnung des Grasbehälters zu der Austrittsöffnung ausgerichtet ist, und einer zweiten Stellung befestigt ist, in welcher die Eintrittsöffnung des Grasbehälters nicht zu der Austrittsöffnung ausgerichtet ist und der Träger die Austrittsöffnung abdeckt.

2. Rasenmäher nach Anspruch 1, wobei die Austrittsöffnung in dem Gehäuse gebildet ist und wobei eine Rinne von einem Ausgang der Schneidkammer zu der Austrittsöffnung führt.

3. Rasenmäher nach Anspruch 1 oder Anspruch 2, wobei der Träger (4) eine Basisplatte (4a) und zwei Seitenplatten (4b) aufweist.

4. Rasenmäher nach Anspruch 3, wobei jede der Seitenplatten (4b) mit einem nach innen ragenden Flansch (7) ausgestattet ist, und wobei die Seitenwände des Grasbehälters (3) mit komplementären Rillen (3a) ausgebildet sind, wobei die Flansche und die Rillen Mittel zum abnehmbaren Befestigen des Grasbehälters an dem Träger (4) bilden.

5. Rasenmäher nach Anspruch 4, wobei die Flansche (7) sich entlang ihrer Längen verjüngen.

6. Rasenmäher nach einem der Ansprüche 1 bis 5, wobei die Anordnung derart ausgebildet ist, dass der Grasbehälter (3) an dem Träger (4) in allen Stellungen außer der zweiten Stellung verriegelt ist.

7. Rasenmäher nach einem der Ansprüche 1 bis 6, wobei der Träger (4) verschwenkbar an dem Gehäuse (1) mittels zwei Paaren an Koppelelementen (5, 6) befestigt ist, ein Paar an jeder Seite des Rasenmähers, wobei jedes Koppelelement jedes Paares verschwenkbar sowohl an dem Gehäuse als auch an dem Träger an gegenüberliegenden Enden davon befestigt ist.

8. Rasenmäher nach Anspruch 7, wobei das eine Koppelelement jedes Paares länger ausgebildet ist als das andere Koppelelement dieses Paares und wobei jedes der einen Koppelelemente unterhalb jedes der anderen Koppelelemente angeordnet ist.

## Revendications

1. Tondeuse à gazon comprenant un plateau (1) définissant une chambre de coupe ouverte à une donnée de terrain, une ouverture de sortie pour éloigner l'herbe coupée de la chambre de coupe, et un caisson à herbe (3) ayant une ouverture d'entrée (3b) pour admettre de l'herbe coupée, où le caisson à herbe est monté de manière détachable sur, et supporté par, un support (4), et le support est monté de façon pivotante sur le plateau pour un mouvement entre une première position dans laquelle l'ouverture d'entrée du caisson à herbe est en alignement avec l'ouverture de sortie, et une seconde position dans laquelle l'ouverture d'entrée du caisson à herbe est hors d'alignement avec l'ouverture de sortie et le support protège l'ouverture de sortie.

2. Tondeuse à gazon selon la revendication 1, dans laquelle l'ouverture de sortie est formée dans le plateau, et une glissière conduit d'une sortie de chambre de coupe à l'ouverture de sortie.

3. Tondeuse à gazon selon la revendication 1 ou la revendication 2, dans laquelle le support (4) présente une plaque de base (4a) et deux plaques latérales (4b).

4. Tondeuse à gazon selon la revendication 3, dans laquelle chacune des plaques latérales (4b) est munie d'un rebord (7) en saillie vers l'intérieur, et les parois latérales du caisson à herbe (3) son munies de gorges complémentaires (3a), les rebords et les gorges constituant un moyen pour monter de façon détachable le caisson à herbe sur le support (4).

5. Tondeuse à gazon selon la revendication 4, dans laquelle les rebords (7) s'évasent sur toute leur longueur.

6. Tondeuse à gazon selon l'une quelconque des revendications 1 à 5, dans laquelle l'agencement est tel que le caisson à herbe (3) est verrouillé sur le support (4) dans toutes les positions sauf ladite deuxième position.

7. Tondeuse à gazon selon l'une quelconque des revendications 1 à 6, dans laquelle le support (4) est attaché de façon pivotante au plateau (1) par deux paires de liaisons (5, 6), une paire de chaque côté de la tondeuse à gazon, chaque liaison de chaque paire étant attachée de façon pivotante à la fois au plateau et au support à des extrémités opposées de ceux-ci.

8. Tondeuse à gazon selon la revendication 7, dans laquelle une liaison de chaque paire est plus longue que l'autre liaison de cette paire, et chaque dite une liaison est positionnée sous chaque dite autre liaison.
